# EUROPEAN PATENT SPECIFICATION

(11) **EP 3 369 964 B1**
(45) Date of publication and mention of the grant of the patent: **16.10.2019**
(21) Application number: 18159723.8
(22) Date of filing: 02.03.2018
(51) Int. Cl.: F16G 11/14, B63B 21/20, G01L 5/10

(54) **SMARTLINK**
SMARTLINK
LIEN INTELLIGENT

(30) Priority: 02.03.2017 NL 2018463
(43) Date of publication of application: 05.09.2018
(73) Proprietor: Rotortug Holding B.V., 3011 XE Rotterdam (NL)
(72) Inventor: Jansen, Marinus Wouter, 3011 XE Rotterdam (NL); Griffin, Barry Albert, 3011 XE Rotterdam (NL)
(74) Representative: V.O.

(56) References cited:
- EP-A1- 2 039 959
- GB-A- 1 241 776
- US-A- 4 358 212
- US-A- 5 016 026
- US-A1- 2013 000 087
- US-A1- 2015 330 846

## Description

The present disclosure relates to a device intended for measuring tensile loads in a line system and/or connecting two lines within a line system of different materials. Lines and line systems are a means of connecting two or more objects and the prior art recognizes a wide range of ropes, wires and lines constructed from a range of different materials such as steel wire, or synthetic materials such as polyester, polyethylene, polyamide and UHMWPE fibres with a range of characteristics deemed desirable for such systems.

Such line systems are used in a range of different applications, including, but not limited to, rigging, hoisting, lifting, mooring, anchoring, towing operations either in a marine and/or subsea environment or for example land-based activities. As such any apparatus such as fairleads, tackles or the like in contact with a line in the line system can be considered a part of said system. In a number of these applications knowledge of the line tension can be beneficial to determine weight or load enacted on the line system, but also to determine dynamic amplifications of said loads. These benefits, include but are not limited to, establishing safe working conditions, record line system service life or determine online performance data of, for example towing vessels. Load cells, or line tension meters known in the prior art are often impractical to fit into line systems, or are not directly measuring the tensile force in-line, but rather a derivative thereof. The prior art to measure said tensile loads in-line also generally relies on shackles, and load cells designed to work with specific shackle sizes, to provide line tensions. The application of such shackles results in an unwieldy and heavy load cell sub-system that can damage fairleads and/or winches or other parts of the line system.

US5016026 discloses a tensile load link according to the preamble of the independent claims.
a purpose of the present disclosure is to measure such loads and wirelessly transmit the load signal to a base for direct read-out, print, record or post-processing of said load signal. A purpose of the present disclosure is to safely connect ropes, wires and lines of different materials without said materials damaging each other and with improved bending radius compared to prior art tensile load links. Furthermore a purpose of the present disclosure is to accomplish at least one of the aforementioned purposes in a practicable and manner wherein the present disclosure can successfully be used in a line system including fairleads, tackles, or other guiding apparatus. Yet another purpose of the present disclosure is to accomplish at least one of the aforementioned purposes in a hostile exterior environment, such as a corrosive marine environment, underwater, or susceptible to high mechanical loads.
Figure 1a-d are schematic view of line systems, to illustrate the possible components of a line system and their respective positions.
Figure 2a illustrates a cross-sectional view of an outer geometry of an embodiment of the present disclosure.
Figure 2b illustrates a front-view of an outer geometry of an embodiment of the present disclosure.
Figure 2c illustrates a side-view of an outer geometry of an embodiment of the present disclosure.
Figure 2d illustrates an isometric view of an outer geometry of an embodiment of the present disclosure.
Figure 3 illustrates an embodiment of the present disclosure, wherein fig. 3A shows a schematic cross sectional view and fig. 3B shows a side view of such embodiment;
Figure 4 illustrates another embodiment of the present disclosure, wherein fig. 4A shows a cross sectional view along the line A - A in fig. 4B, which shows a side view of the embodiment enclosed between two lines;
Figure 5 illustrates yet another embodiment of the present disclosure, wherein fig. 5A shows a frontal view and fig. 5B a side view of the embodiment;
Figure 6 illustrates an advantageous embodiment of the present disclosure, wherein fig. 6A shows a frontal view and fig. 6B a side view of the embodiment;.
Figure 7 illustrates a lightweight embodiment of the present disclosure, in a perspective view, partially broken away; and
Figure 8 shows a link of the present disclosure as part of a line system of the disclosure.

In this description exemplary embodiments of the present disclosure are shown, by way of example only. These should by no means be considered as limiting the scope of the present disclosure. The drawings are schematic only. In these drawings the same or similar reference signs shall be used for the same or similar parts or features.

In this description a line system includes, but is not limited to, a minimum of two lines and/or ropes, possibly guided by one or more sheaves, fairleads, or other guiding apparatus.

In this description practicable has to be understood to at least mean the ability to pull a system or at least part thereof according to the present disclosure along guiding apparatus, or fairleads and the ability to withstand impact loads associated with such pulling a great many times as associated with everyday operations of the present disclosure. In at least one embodiment of the present disclosure practicable is understood to at least mean a significantly lower weight compared to tensile load link systems, including connections (such as shackles), as known in the prior art. In the same, or yet another embodiment practicable can also be understood to at least mean without sharp edges or protrusions which can possibly damage guiding apparatus, fairleads, or other lines in the line system.

Systems according to the disclosure can moreover also be practical for additional or alternative reasons.

In this description line has to be understood as meaning at least a line or wire which is relatively flexible, made of for example natural fibres, metal fibres and/or synthetic fibres or of a solid material or combinations thereof. In this description a load link or line system an be understood as a system comprising at least one load link according to the disclosure and further components, which may be integral with or separate from said load link.

In this description rugged has to be understood as including but not limited to operating conditions for a system or method according to the present disclosure in hostile exterior environments, such as for example, marine environments, sub-sea environments, or other underwater operations and/or capable of sustaining mechanical impact loads when pulled along fairleads or other guiding apparatus within a line system on a day-to-day basis. Ruggedized can be understood as for example meaning that an apparatus defined as such can withstand such rugged environment or conditions.

In this description connecting or interlocking two lines should be understood that a first line is coupled to a second line using a link as will be described.

In general terms a tensile load link according to the description enables measurement of a tensile force in a line system, specifically in a practicable manner and preferably transmits said measurement to a base station for direct read-out, print, record or post-processing of said load signal. Said record can display a line system's service record, or for example be used to actively or passively adjust the line system to absorb dynamic loads in the line system.

In embodiments processing of signals representative for at least one force measured, such as a tensile force in a link or in a line, may in part or entirely be done electronically and may in part or entirely be handles by electronics in and/or on said link. Data regarding such processed signal or signals may then be transmitted and/or stored. Such data may be more compact than the original signal and may require less memory and/or energy for storage and/or transmission than the full signal or signals.

For the purpose of the present disclosure use can be made or reference to an apparatus similar to NL1034792. An apparatus according to the disclosure can have a similar outer geometry as NL1034792, or derivative thereof and can connect two lines within a line system on the same basic principle wherein one line is guided along an outer body circumference and another line is guided through an inner body circumference or opening. The present disclosure can embody a single body or multiple connected bodies defining at least part of the outer- and/or inner body circumferences.

The present disclosure can be used to measure line tension forces directly or indirectly, for example by applying strain gauges between the bodies in case of a multi-body embodiment of this enclosure, and/or by applying strain gauges directly to a single body embodiment of the present disclosure. Said strain gauges are connected to a power unit and provide a signal to a transmitter unit fitted on or into the body.

An apparatus, and especially one or more bodies or body parts thereof of the present disclosure can be constructed from metal, such as for example aluminium, or other lightweight metal alloy. Synthetic or composite fibre structures can be used as well, for example in case of especially lightweight applications. In embodiments of the present disclosure a hollow fibre composite body can form the main body of the present disclosure.

In preferred embodiments the tensile load link is ruggedized to operate in hostile environments, possibly sub-sea environments up to 100meters or more. Furthermore a tensile load link according to the description enables a practicable connection of two lines in a line system.

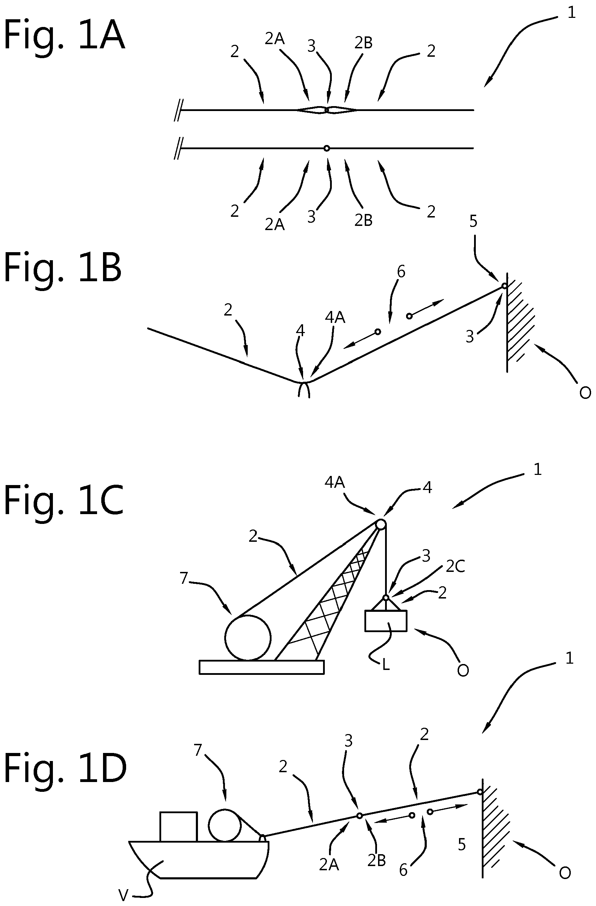

Figures 1a-d schematically show a number of different line systems 1 viewed from a side, with a number of possible lines 2 and line connections 3. A line connection 3 is referred to hereinafter should be understood as at least encompassing connecting a line 2, for example an end-piece of a line 2 to another part of the line system 1, such as for example to another line 2. Said line system 1 can include physical contact points 4A that fairlead a line 2 to an object O, establishing a connection 5 between the line system 1 and object O capable of sustaining significant tensile forces 6. Herein a contact point is to be understood as that it can be formed by at least a point of contact, a line contact or relatively small area of contact.

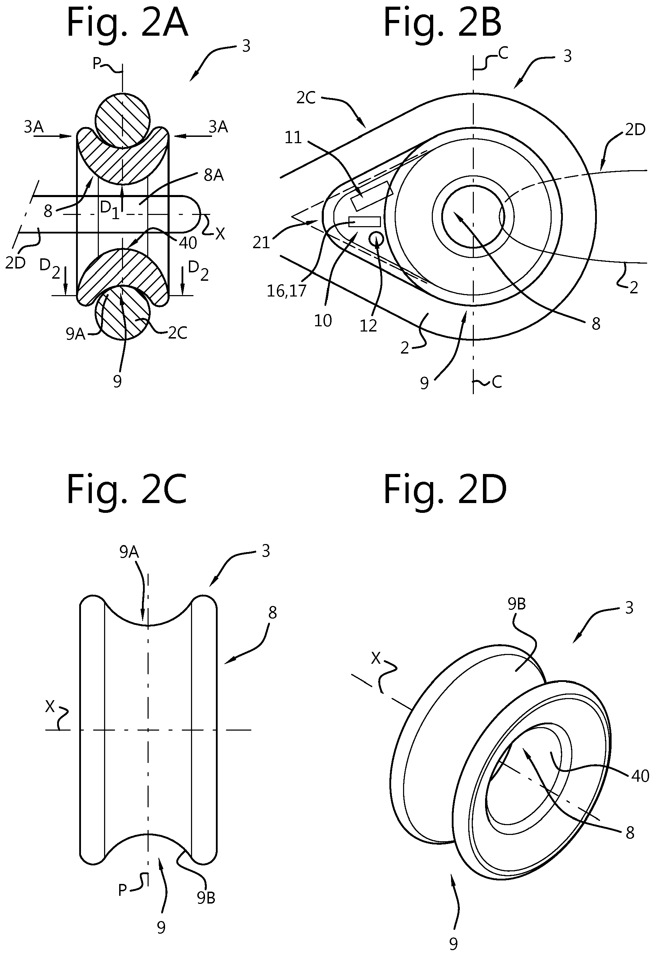

In fig. 1A two connections between lines are shown, each disclosing ends 2A, 2B of two lines 2 which are shown schematically, connected to each other by a line connection 3, especially a link 3 according to the disclosure. In this embodiment each end 2A, 2B comprises a loop 2C, 2D, the one loop 2A extending through the other loop 2D. A link 3 can be provided in between said loops 2C, 2D, as will be explained, for example a link 3 according to any one of fig. 2 - 8. In the lower embodiment the loops 2C, D are relatively small compared to the loops of the upper embodiment, or have been omitted entirely.

In fig. 1B shows schematically a line 2 connected to a fixed contact point or connection 5, at a base or object O, such as for example a stationary structure, such as for example but not limited to a wall, quay, shore or the like, or a movable structure, such as for example but not limited to a vessel, crane, vehicle or the like. In the embodiment shown the connection 5 can for example be established by a link 3 connected to said object O, wherein the line 2 is connected to said link 3.

In the embodiment of fig. 1B the line 2 is led through a guiding element 4, such as a fairlead forming a further contact point 4A. Again such contact point can be formed by or comprise a link 3 through which the line 2 is led. If desired a link 3 can be provided at or as the contact point 4A, in stead of or additional to a link 3 at the connection 5.

Fig. 1C schematically shows a crane C, having a winch 7 to which a wire or line 2 is connected. The line 2 is led over a guiding element 4, forming a contact point 4A, and near an end 2A is connected to a load L, which can also be referred to an object O through a connection or link 3. In this embodiment the load L i.e. object O is supported by at least one further line 2, coupled to the link 3, for example by a loop 2C or a hook or the like. Any such connection to a link 3 is suitable in the disclosure.

Fig. 1D schematically shows an object O, shown as for example an assisted vessel, and an assisting vessel V, such as for example a tow boat. The assisting vessel V is connected to the object O by a towing line assembly 1, comprising at least two lines 2, connected by a link 3. The one line is connected to the assisting vessel V through a winch 7, whereas the other line 2 is connected to the object O at a further connection 5. A tension 6 in at least one of the lines 2 can be measured or at least monitored by using a link 3 according to the present disclosure. It should be noted that such link 3 can be positioned in any position between the object O and the assisting vessel V, such as for example close to the object O, and/or multiple links 3 can be provided.

A line system 1 according to the disclosure can include a winch 7 or tensioner device 7. Historically with winches, the towing cable length can be adapted to the desired length and distance only. Render and recovery towing winches are able to apply and/or maintain a constant pulling force on a towing cable connection 5 in case object O and the line system base, such as a vessel or crane, move relative to each other due to for example heavy seas or winds. Said winches are also known as render & recovery, rend & receive, constant tension winches, umbilical winches or escort winches depending on the application, either term being interchangeable with the other for purposes of the present disclosure.

Figures 2A - D illustrate a suitable outer geometry for an exemplary embodiment of a link 3 suitable for the present disclosure, which can for example in general be according to NL1034792. This outer geometry includes an inner facing 8 and outer facing 9 guiding lines 2A and 2B as an example only. This body outer geometry can be modified in a practicable manner to include additional body 10 to accommodate a battery unit 11 and transmitter-unit 12 in case of a wired and/or wireless embodiment of the present disclosure. Apparatus as described in NL1034792 are well-known in the prior art and in general can provide a suitable body to achieve the purpose of the present disclosure.

In the embodiment shown in fig. 2A - D the link is substantially ring shaped, having a central opening or inner facing 8 and an outer periphery or outer facing 9. The shape of the link 3 in this embodiment can generally be defined by a substantially kidney shaped cross sectional profile having an apex 40 facing a central axis X, rotated around said central axis X, forming substantially torus shape with a peripheral groove 9A forming at least part of the outer facing 9 and a substantially diablo shaped opening 8A comprising the central axis X and forming at least part of the inner facing 8. The opening 8A is smallest in diameter D₁ at a central plane of symmetry P perpendicular to the axis X and has the largest diameter D₂ at opposite sides 3A of the link 3. The inner surface or facing 8 is smoothly curved, preferably having a continues curve between opposite sides 3A. The groove 9A has a smooth, preferably continuously curved inner surface 9B.

In fig. 2A and 2B schematically a first line 2 is shown led around the outer facing 9, partly extending in the groove 9A, whereas a second line 2 is led through the opening 8A, over the inner facing 8. In the embodiment the first line 2 can have a loop 2C extending around the link, over the outer facing 9, whereas the other line 2 can have a further loop 2D extending through the opening 8A, over the inner facing 8. The loops 2C, 2D can be made in any suitable way, for example but not limited to using splicing, or other suitable ways as known in the art. The loops 2C, 2D can extend in different planes, especially in planes extending at substantially right angles relative to each other. This can prevent undesirable torsion.

In fig. 2B the link 3 is shown having a substantially tear drop or water drop, or more generally speaking non circular shape. A non-circular shape can have the advantage that the link 3 can have a direction of orientation relative to at least one of the lines 2 to be interconnected by the link 3. In the embodiment shown in fig. 2B at a left hand side of a cross sectional plane C - C through the central axis X of the opening 8A the link 3 is wider than on the opposite right hand side. An apex 21 is formed to the left of said plane C - C. The loop 2C of the first line 2 can fit relatively snugly around the outer facing 9, such that the link 3 will not rotate around the central axis X within said loop 2C. There is hence an additional body 10 or part of the body of the link accommodating the battery unit 11 and transmitter-unit 12. The groove 9A preferably also extends over at least part of the outer periphery of the said boy or body part 10. In a link 3 according to the present disclosure at least one transducer such as a gauge 16, 17 is provided for measuring strain, for example pressure, in the link 3 representative of forces exerted in the line or lines connected to said or by said link 3.

Fig. 2D shows a link according to the disclosure, without the additional body 10, hence a circular ring shaped link 3. The view as shown in fig. 2A and 2C can be a cross sectional view and side view of a link 3 of either the embodiment of fig. 2B or of 2D

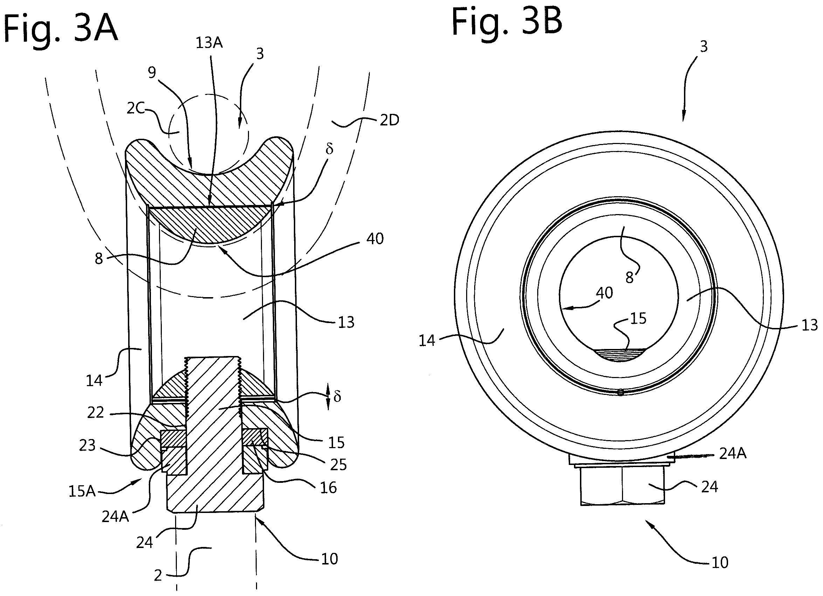

Figure 3a and 3b illustrate an embodiment of the present disclosure wherein the link comprises an inner ring 13 connected to an outer ring 14 by means of a connection 15A. The outer ring 14 comprises at least a substantial part of the outer facing 9, at least to the extend that a line led over said facing substantially engages said outer facing 9 on said outer ring. Preferably the outer facing 9 or at least the groove 9A is substantially entirely provided on the outer ring 14. An outer periphery 13A of the inner ring 13 is at least partly and preferably substantially entirely surrounded by the outer ring 14 and comprises a substantial part of the inner facing 8, at least a central portion thereof, including the apex 40. The connection 15A in this embodiment comprises a bolt 15 inserted through an opening 22 extending radially through the outer ring 14 and bolted into the inner ring 13. A recess 23 is provided in the outer periphery of the outer ring 14 in which a gauge 16 is positioned, between a head 24 of the bolt 15 and an opposite bottom 25 of the recess 23. During use the one line 2, extending over the inner facing, will engage the inner ring 13 and move this relative to the outer ring 14 held primarily by the other line 2 extending around the outer facing. In this embodiment of the present disclosure, a compression load gauge 16 is used, as is known in the prior art, which can accurately determine the deflection δ in mm between ring 13 and ring 14. A washer 24A may be provided between the head 24 and the gauge 16.

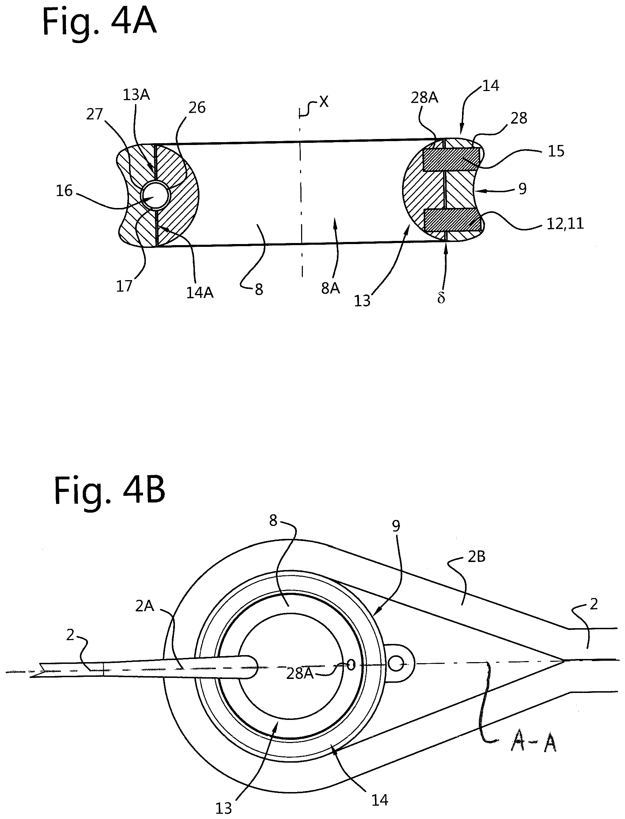

Figures 4A and B illustrate another embodiment of the present disclosure, again comprising an inner ring 13 and an outer ring 14. In this embodiment the inner ring has a groove 26 in the outer periphery 13A, matching or at least opening to a groove 27 in the inner periphery 14A of the outer ring 14. A gauge 16 is provided between the inner and outer ring 13, 14, for example a load pin strain gauge 17. Such gauge is known from the prior art. In this embodiment the gauge 17 is provided extending in the grooves 26, 27. Furthermore at least one guide pin 15 is provided extending through an opening 28 in the outer ring 14 into a matching opening 28A in the inner ring 13. The at least one guide pin 15 substantially prevents movement of the inner ring 13 relative to the outer ring 14 in a direction parallel to the axis X. Multiple guide pins 15 can be provided, also substantially preventing rotation of the rings 13, 14 relative to each other. In other words the guide pins 15 and/or the gauge 17 can maintain a desired orientation of the rings 13, 14 relative to each other. In such embodiment the gauge 17 can measure deflection δ between ring 13 and ring 14 with guide pins 15 securing the orientation of inner ring 13 versus outer ring 14. A battery and a transmitter 12 can be provided as well, for example as a guide pin 15 or in one or both of the rings 13, 14.

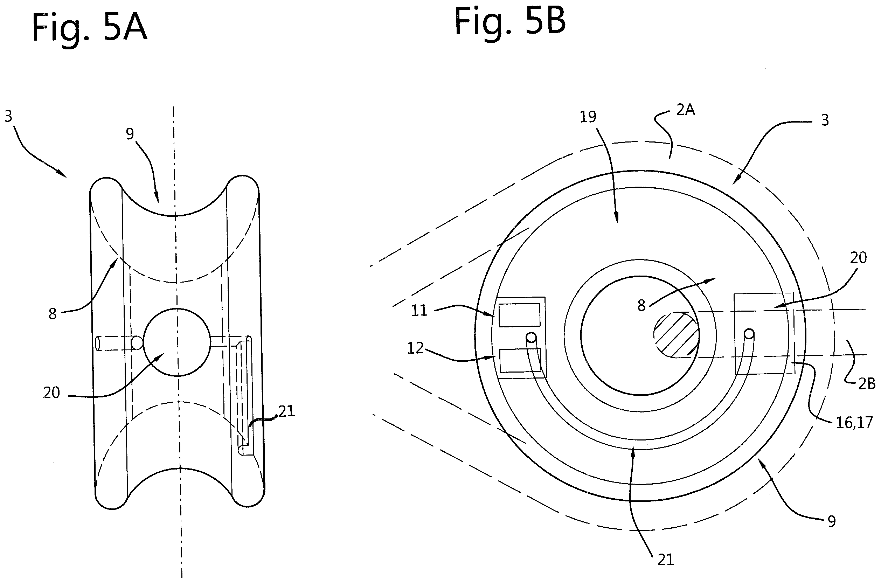

Figure 5a-b illustrates yet another embodiment of the present disclosure wherein the tension link 3 comprises a substantially solid body 19 with a strain gauge compartment 20 positioned between inner facing 8 and outer facing 9, i.e. between line 2A and 2B. A strain gauge 16, 17 is positioned in said compartment 20 and is connected to a battery-unit 11 and/or transmitter unit 12 by means of wiring extending through a channel 21 alongside outer facing 9. The strain gauge 16, 17 can partly extend outside said compartment 20 into the groove 9A, to be engaged by a line 2. In embodiment the gauge 16, 17 and the battery and/or transmitter could be provided in the same chamber 20.

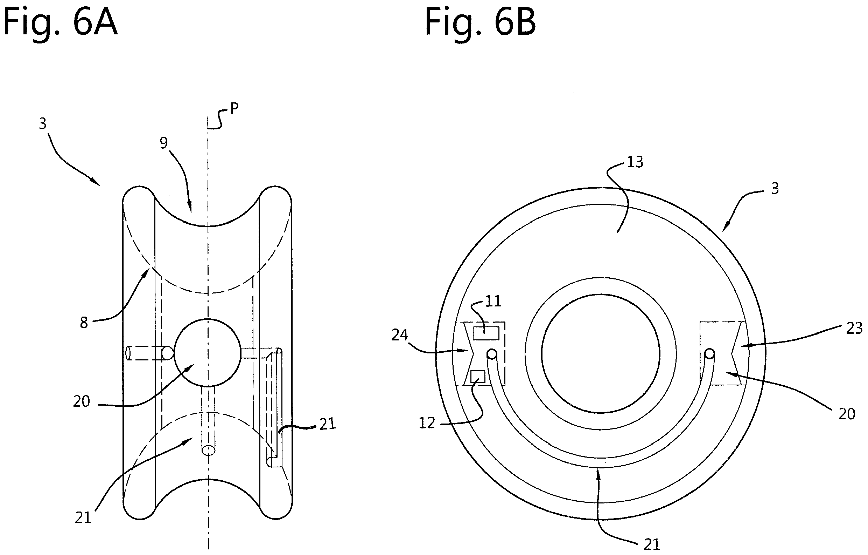

Figure 6a-6b illustrates an advantageous embodiment of the present disclosure, similar to that of fig. 5. In this embodiment channel 21 is arranged fully recessed, or inside body 19 to improve the ruggedness of the embodiment. In this embodiment compartment 20 and the battery unit 11 and/or transmitter unit 12 can be closed by means of a smaller body 23 and 24 respectively, such as a lid or plug, or other substance, such as a kit, silicone or resin, to prevent water and/or dust ingress and impact. In yet another embodiment of the present disclosure a wired transmitter unit 12 is used in stead of a wireless transmitter unit 12- and/or battery-unit 11. In one embodiment of this present disclosure an inner ring 13 and outer ring 14 or two mirrored ring halves, substantially symmetrical over plane P, are fitted and milled as such to create a fully enclosed strain gauge compartment 20 and/or, the fully recessed channel 21. In yet another embodiment one or more connections, or pins also substantially prevent rotation of the rings 13, 14 relative to each other. In yet another embodiment said rings 13 and 14 are fully connected by for example a weld, or resin bonding, effectively creating a single body configuration.

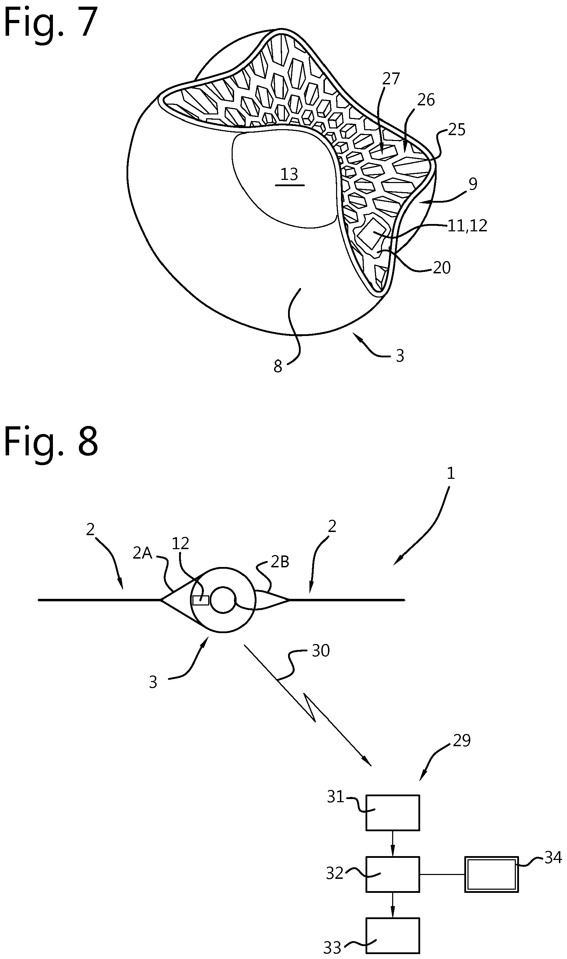

Figure 7 illustrates a lightweight embodiment of the present disclosure. This embodiment of the present disclosure consists of or at least comprises a hollow synthetic fibre construction wherein the strain gauges, battery- and transmitter unit can be located inside the hollow construction in any suitable manner, for example in an opening 20 as previously discussed, in a channel or other space provided in and/or on said ring, as discussed. In this embodiment the ring can be formed comprising an outer shell 25 which is substantially closed and provided for a substantially smooth surface area or areas 8, 9 for engaging cables or lines 2A, 2B, as discussed. The inner volume of the ring can comprise a lightweight structure 26, such as for example a structure forming closed or open cells or channels 27. Such structure can be made in a known manner. Such structure 26 can be made using plastics, resins, metal, fibers or the like. In embodiments the structure 26 and shell 25 can be made integrally. In embodiments the structure 26 can be made and then be covered by said shell 25. In embodiments the structure 26 can be a foamed structure.

Figure 8 illustrates a link 3 of the present disclosure as part of a line system 1 wherein transmitter unit 12 sends a wireless signal 30 to a data processing system 29 comprising a receiver unit 31 and wherein said signal 30, or parts thereof is displayed on a display 34 and/or wherein said signal 30 is processed, or filtered by means of an electronic filter in a processing unit 32 to provide a steady tension 6 readout and/or said signal 30 is stored on a data-recording device 33. In embodiments the data processing system 29 or at least parts thereof, such as the data recorder 33 and signal processing means such as a filter or filters 32 can be comprised in and/or on the link 3. In such embodiments processed signals could be sent to a receiver 31 for display and/or the data could be read from the recorder later, for example after removal of the link from the line system 1 or after significant or total release of tension from the lines. In this respect signals to be processed should be understood as at least meaning signals representative of a measured tensile load in the link 3 and/or at least one of the lines connected thereto, or a derivative thereof. In embodiments some or all of the electronic components can be provided in and/or on the link 3, for example by means of a circuitry board on which said components are provided and/or integrated as a chip.

The invention is by no means limited to any of the embodiments specifically shown and/or described herein. Many variations thereof are possible within the scope of the invention as defined by the claims, including all combinations of elements, features and parts of embodiments as disclosed. In embodiments according to the disclosure a link 3 can be used connecting a line to another object. In stead of two lines and/or line loops for engaging a link 3 of the disclosure, also other elements can be used for such engagement, such as but not limited to rings, hooks, shackles or carabiners. An inner and/or outer facing of a link can be shaped differently, for example an outer facing for accommodating two or more parallel loops of a single or different lines. The link can have a different outer shape and can be made of any suitable material or combinations of materials. These and many such variations are considered to have been disclosed herein.

## Claims

1. A tensile load link (3) for interlocking a minimum of two lines (2), guiding said at least two lines(2) along an inner facing (8) and outer facing (9) of said link respectively, wherein said link (3) is provided with at least one transducer for measuring a tensile force (6) in at least one of said lines (2) and/or in said link (3),
**characterized in that**
- said load link comprises an inner ring (13) and outer ring (14) connected by a single connection (15), wherein at least one transducer (16, 17) is provided, preferably a load gauge (16) fitted in and/or around said connection (15); or
- said load link comprises an inner ring (13) and outer ring (14) connected by multiple connections, wherein at least one transducer is provided, especially load gauges (16, 17) fitted therein.

2. A tensile load link (3) for interlocking a minimum of two lines (2), guiding said at least two lines(2) along an inner facing (8) and outer facing (9) of said link respectively, wherein said link (3) is provided with at least one transducer for measuring a tensile force (6) in at least one of said lines (2) and/or in said link (3),
**characterized in that**, said load link comprises a substantially single body (19) with one or multiple transducers, such as strain gauges fitted in a strain gauge compartment (20) in or on or in between inner facing (8) and outer facing (9), wherein said load link includes a channel (21) for wiring connecting a transducer (16, 17) in said compartment (20) to a transmitter unit, wherein said channel (21) is fully recessed inside single body (19).

3. A tensile load link (3) of claim 1 or 2, wherein a transmitter unit (12) is provided for transmitting a signal representative for said tensile force (6).

4. A tensile load link (3) of claim 3, wherein said transmitter unit (12) is a wireless transmitter unit (12).

5. A tensile load link (3) of claim 3 or 4, wherein said transmitter unit (12) is powered by means of a battery unit (11).

6. A tensile load link (3) of claim 3, 4 or 5, wherein further a receiver unit (26) is provided for receiving said signal;

7. A tensile load link (3) of any one of claims 1 - 6, wherein further a data-recorder (33) is provided for recording said measurement of tensile force (6).

8. A tensile load link of any one of the preceding claims, wherein further a display (31) is provide for displaying said measurement of tensile force (6).

9. A tensile load link according to any one of the previous claims, wherein a processing unit (31) is provided for electronically processing at least a signal representative of said measurement of tensile force (6), such as filtering of said signal.

10. A tensile load link according to claim 9, wherein said processing unit is provided in said load link (3).

11. A tensile load link (3) of any one of claims 1 to 10, wherein at least part of said outer facing (9) is formed by or comprises a groove (9A) and/or is at least partly elliptical when viewed in cross-section.

12. A tensile load link (3) of claim 1, wherein a relative orientation of inner ring (13) versus outer ring (14) is secured by means of at least one or multiple connecting elements and/or guide pins (15).

13. A tensile load link (3) of any one of the previous claims, comprising at least two connected ring bodies (13 and 14).

14. A tensile load link (3) of any one of claims 1 to 13, wherein said load link is constructed using a synthetic fibre material and has a substantial hollow construction.

## Patentansprüche

1. Zuglastbindeglied (3) zum Ineinandergreifen von wenigstens zwei Leitungen (2), wobei die wenigstens zwei Leitungen (2) entlang einer Innenverkleidung (8) bzw. einer Außenverkleidung (9) des Bindeglieds geführt werden, wobei das Bindeglied (3) mit wenigstens einem Wandler zum Messen einer Zugkraft (6) in wenigstens einer der Leitungen (2) und/oder in dem Bindeglied (3) versehen ist,
**dadurch gekennzeichnet, dass**
das Lastbindeglied einen Innenring (13) und einen Außenring (14) umfasst, die durch eine einzelne Verbindung (15) verbunden sind, wobei wenigstens ein Wandler (16, 17) vorgesehen ist, vorzugsweise ein in der und/oder um die Verbindung (15) herum angebrachtes Lastmessgerät (16); oder
das Lastbindeglied einen Innenring (13) und einen Außenring (14) umfasst, die durch mehrere Verbindungen verbunden sind, wobei wenigstens ein Wandler vorgesehen ist, insbesondere darin angebrachte Lastmessgeräte (16, 17).

2. Zuglastbindeglied (3) zum Ineinandergreifen von wenigstens zwei Leitungen (2), wobei die wenigstens zwei Leitungen (2) entlang einer Innenverkleidung (8) bzw. einer Außenverkleidung (9) des Bindeglieds geführt werden, wobei das Bindeglied (3) mit wenigstens einem Wandler zum Messen einer Zugkraft (6) in wenigstens einer der Leitungen (2) und/oder in dem Bindeglied (3) versehen ist,
**dadurch gekennzeichnet, dass** das Lastbindeglied einen im Wesentlichen einzelnen Körper (19) mit einem oder mehreren Wandlern umfasst, wie z. B. Dehnungsmessstreifen, die in einem Dehnungsmessstreifenfach (20) in oder an oder zwischen der Innenverkleidung (8) und der Außenverkleidung (9) angebracht sind, wobei das Lastbindeglied einen Kanal (21) zum Verdrahten zum Verbinden eines Wandlers (16, 17) in der Kammer (20) mit einer Sendeeinheit enthält, wobei der Kanal (21) vollständig in einem einzigen Körper (19) versenkt ist.

3. Zuglastbindeglied (3) nach Anspruch 1 oder 2, wobei eine Sendeeinheit (12) zum Senden eines Signals vorgesehen ist, das für die Zugkraft (6) repräsentativ ist.

4. Zuglastbindeglied (3) nach Anspruch 3, wobei die Sendeeinheit (12) eine drahtlose Sendeeinheit (12) ist.

5. Zuglastbindeglied (3) nach Anspruch 3 oder 4, wobei die Sendeeinheit (12) mittels einer Batterieeinheit (11) mit Energie versorgt wird.

6. Zuglastbindeglied (3) nach Anspruch 3, 4 oder 5, wobei ferner eine Empfängereinheit (26) zum Empfangen des Signals vorgesehen ist;

7. Zuglastbindeglied (3) nach einem der Ansprüche 1 bis 6, wobei ferner ein Datenaufzeichner (33) zum Aufzeichnen der Messung der Zugkraft (6) vorgesehen ist.

8. Zuglastbindeglied nach einem der vorhergehenden Ansprüche, wobei ferner eine Anzeige (31) zum Anzeigen der Messung der Zugkraft (6) vorgesehen ist.

9. Zuglastbindeglied nach einem der vorhergehenden Ansprüche, wobei eine Verarbeitungseinheit (31) zum elektronischen Verarbeiten wenigstens eines Signals vorgesehen ist, das für die Messung der Zugkraft (6) repräsentativ ist, beispielsweise zum Filtern des Signals.

10. Zuglastbindeglied nach Anspruch 9, wobei die Verarbeitungseinheit in dem Lastbindeglied (3) vorgesehen ist.

11. Zuglastbindeglied (3) nach einem der Ansprüche 1 bis 10, wobei wenigstens ein Teil der Außenverkleidung (9) durch eine Nut (9A) gebildet ist oder diese umfasst und/oder wenigstens teilweise elliptisch ist, wenn sie in Querschnitt betrachtet wird.

12. Zuglastbindeglied (3) nach Anspruch 1, wobei eine relative Ausrichtung des Innenrings (13) zum Außenring (14) mittels wenigstens eines oder mehrerer Verbindungselemente und/oder Führungsstifte (15) sichergestellt ist.

13. Zuglastbindeglied (3) nach einem der vorhergehenden Ansprüche, umfassend wenigstens zwei verbundene Ringkörper (13 und 14).

14. Zuglastbindeglied (3) nach einem der Ansprüche 1 bis 13, wobei das Lastbindeglied unter Verwendung eines synthetischen Fasermaterials aufgebaut ist und eine im wesentlichen hohle Konstruktion aufweist.

## Revendications

1. Lien d'effort de traction (3) pour enclencher au minimum deux lignes (2), guidant lesdites au moins deux lignes (2) le long d'une face interne (8) et d'une face externe (9) dudit lien respectivement, dans lequel ledit lien (3) est pourvu d'au moins un transducteur pour mesurer une force de traction (6) dans au moins l'une desdites lignes (2) et/ou dans ledit lien (3),
**caractérisé en ce que**
- ledit lien d'effort de traction comprend un anneau interne (13) et un anneau externe (14) reliés par une liaison (15) unique, dans lequel au moins un transducteur (16, 17) est prévu, de préférence une jauge de charge (16) ajustée dans et/ou autour de ladite liaison (15) ; ou
- ledit lien d'effort de traction comprend un anneau interne (13) et un anneau externe (14) reliés par plusieurs liaisons, dans lequel au moins un transducteur est prévu, en particulier des jauges de charge (16, 17) ajustées en leur sein.

2. Lien d'effort de traction (3) pour enclencher au minimum deux lignes (2), guidant lesdites au moins deux lignes (2) le long d'une face interne (8) et d'une face externe (9) dudit lien respectivement, dans lequel ledit lien (3) est pourvu d'au moins un transducteur pour mesurer une force de traction (6) dans au moins l'une desdites lignes (2) et/ou dans ledit lien (3),
**caractérisé en ce que** ledit lien d'effort de traction comprend un corps (19) sensiblement unique doté d'un ou plusieurs transducteurs, tels que des extensomètres ajustés dans un compartiment d'extensomètre (20) dans ou sur ou entre la face interne (8) et la face externe (9), dans lequel ledit lien d'effort de traction inclut un canal (21) pour relier par câblage un transducteur (16, 17) dans ledit compartiment (20) à une unité émettrice, dans lequel ledit canal (21) est entièrement en retrait à l'intérieur du corps (19) unique.

3. Lien d'effort de traction (3) selon la revendication 1 ou 2, dans lequel une unité émettrice (12) est prévue pour transmettre un signal représentant ladite force de traction (6).

4. Lien d'effort de traction (3) selon la revendication 3, dans lequel ladite unité émettrice (12) est une unité émettrice (12) sans fil.

5. Lien d'effort de traction (3) selon la revendication 3 ou 4, dans lequel ladite unité émettrice (12) est alimentée au moyen d'une unité de batterie (11).

6. Lien d'effort de traction (3) selon la revendication 3, 4 ou 5, dans lequel en outre une unité réceptrice (26) est prévue pour recevoir ledit signal.

7. Lien d'effort de traction (3) selon l'une quelconque des revendications 1 à 6, dans lequel en outre un enregistreur de données (33) est prévu pour enregistrer ladite mesure de la force de traction (6).

8. Lien d'effort de traction selon l'une quelconque des revendications précédentes, dans lequel en outre un écran (31) est prévu pour afficher ladite mesure de la force de traction (6).

9. Lien d'effort de traction selon l'une quelconque des revendications précédentes, dans lequel une unité de traitement (31) est prévue pour traiter électroniquement au moins un signal représentant ladite mesure de la force de traction (6), comme le filtrage dudit signal.

10. Lien d'effort de traction selon la revendication 9, dans lequel ladite unité de traitement est prévue dans ledit lien d'effort de traction (3).

11. Lien d'effort de traction (3) selon l'une quelconque des revendications 1 à 10, dans lequel au moins une partie de ladite face externe (9) est constituée de ou comprend une rainure (9A) et/ou est au moins partiellement elliptique lorsqu'elle est vue en coupe transversale.

12. Lien d'effort de traction (3) selon la revendication 1, dans lequel une orientation relative de l'anneau interne (13) par rapport à l'anneau externe (14) est fixée au moyen d'au moins un ou plusieurs éléments de liaison et/ou de broches de guidage (15).

13. Lien d'effort de traction (3) selon l'une quelconque des revendications précédentes, comprenant au moins deux corps d'anneau reliés (13 et 14).

14. Lien d'effort de traction (3) selon l'une quelconque des revendications 1 à 13, dans lequel ledit lien d'effort de traction est construit à l'aide d'un matériau de fibre synthétique et a une construction sensiblement creuse.
